# EUROPÄISCHE PATENTSCHRIFT

(11) **EP 1 747 373 B1**
(45) Veröffentlichungstag und Bekanntmachung des Hinweises auf die Patenterteilung: **11.03.2009**
(21) Anmeldenummer: 05700024.2
(22) Anmeldetag: 28.01.2005
(51) Int. Cl.: F03B 17/06

(54) **FREISTROMTURBINENANLAGE**
TIDAL TURBINE INSTALLATION
SYSTEME DE TURBINE A FLUX LIBRE

(30) Priorität: 17.02.2004 AT 2412004; 17.11.2004 AT 19242004
(43) Veröffentlichungstag der Anmeldung: 31.01.2007
(73) Patentinhaber: Aqua Libre Energieentwicklungs GmbH, 5222 Munderfing (AT)
(72) Erfinder: Fritz Mondl, 2404 Petronell (AT)
(74) Vertreter: Babeluk, Michael
(86) Internationale Anmeldenummer: PCT/AT2005/000025
(87) Internationale Veröffentlichungsnummer: WO 2005/078276

(56) Entgegenhaltungen:
- DE-A1- 2 933 907
- DE-A1- 10 134 509
- GB-A- 1 563 337
- US-A- 6 109 863
- FRAENKEL P L: "POWER FROM MARINE CURRENTS" PROCEEDINGS OF THE INSTITUTION OF MECHANICAL ENGINEERS. PART A, JOURNAL OF POWER AND ENERGY, MECHANICAL ENGINEERING PUBLICATIONS, SUFFOLK, GB, Bd. 216, Nr. 1, PART A, 2002, Seiten 1-14, XP008026007 ISSN: 0957-6509

## Beschreibung

Die Erfindung betrifft eine Vorrichtung gemäß dem Oberbegriff von Patentanspruch 1.

Es sind sogenannte Strombojen bekannt, die in frei fließende Gewässer eingehängt werden, um aus der Strömungsenergie des Gewässers elektrische Energie zu erzeugen. Der Vorteil solcher Strombojen besteht darin, dass der Herstellungsaufwand im Vergleich zur erzeugbaren Energie sehr gering ist, da keine feststehenden Anlagen wie Staumauern, Wehre oder dergleichen erforderlich sind. Eine solche Vorrichtung wird lediglich am Grund des Gewässers verankert und elektrisch mit einer Einspeisestelle für die erzeugte Energie verbunden.

Aus der GB 1 563 337 A ist eine einschlägige Vorrichtung bekannt, die im Wesentlichen aus einem Floß oder Katamaran besteht, an dessen Unterseite Turbinen angeordnet sind. Durch diese Anordnung wird gewährleistet, dass sich der Turbinenkörper stets knapp unterhalb der Wasseroberfläche befindet, was für den Wirkungsgrad wesentlich ist, da hier die größte Strömungsgeschwindigkeit zu erwarten ist. Nachteilig an dieser Vorrichtung ist jedoch die Gefahr der Beschädigung durch Treibgut. Eine ähnliche Vorrichtung ist in der US 6,109.863 A gezeigt, wobei hier Turbinen vorgesehen sind, die quer zur Axialrichtung angeströmt werden.

Weiters zeigt die DE 101 34 509 A eine als Unterwasserkraftwerk bezeichnete Stromboje der oben beschriebenen Art, bei der das Turbinengehäuse über eine Parallelogrammführung mit einem zusätzlichen Schwimmkörper verbunden ist. Auf diese Weise stellt sich der Abstand der Turbine von der Wasseroberfläche in Abhängigkeit vom Wasserstand der Strömungsgeschwindigkeit und der Länge des Zugmittels, mit dem die Turbine am Grund des Gewässers verbunden ist, ein. Eine solche Vorrichtung ist aufwendig und es ist zu beobachten, dass sich die Turbine in den meisten Fällen relativ weit unterhalb der Wasseroberfläche befindet, also im suboptimalen Bereich arbeitet.

Weitere Lösungen sind aus der AT 96.377 B, der AT 97.560 B, der AT 170.460 B, sowie der CH 684.430 A bekannt.

Aufgabe der vorliegenden Erfindung ist es, eine Vorrichtung der oben beschriebenen Art so weiterzubilden, dass unter normalen Arbeitsbedingungen eine optimale Anströmung gewährleistet ist, im Fall von Hochwässern jedoch die Gefahr einer Beschädigung der Vorrichtung weitestgehend verhindert wird.

Erfindungsgemäß werden diese Aufgaben durch die Merkmale von Patentanspruch 1 gelöst.

Wesentlich an der vorliegenden Erfindung ist die Tatsache, dass sich im Normalbetrieb die Turbine in optimaler Höhe unmittelbar unterhalb der Wasseroberfläche befindet. Diese optimale Höhe wird durch das Fluten bzw. Belüften der Auftriebskörper, das heißt der Hohlräume eingestellt. Bei Niedrigwasser wird die Vorrichtung von dem Ankerseil an dem für sie vorgesehenen Ort gehalten und das Aufstiegsbegrenzungsseil ist lose. Bei steigendem Wasserstand steigt die Vorrichtung mit dem Wasserspiegel entsprechend auf, bis bei hohern Normalwasserstand das Aufstiegsbegrenzungsseil gespannt wird. Steigt der Wasserspiegel weiter, so wird der weitere Aufstieg der Vorrichtung durch das nunmehr senkrecht gespannte Aufstiegsbegrenzungsseil verhindert. Gerade bei Hochwasser besteht eine deutlich erhöhte Wahrscheinlichkeit dafür, dass an der Wasseroberfläche Treibgut, wie etwa losgerissene Bäume, transportiert wird. In Verbindung mit der bei Hochwasser deutlich erhöhten Strömungsgeschwindigkeit würde dies eine eminente Gefahr für die Vorrichtung bedeuten, wenn sich diese unmittelbar unter der Wasseroberfläche aufhielte. Aufgrund der Aufstiegsbegrenzung ist es jedoch möglich, eine solche Beschädigung mit an Sicherheit grenzender Wahrscheinlichkeit zu verhindern. Von besonderem Vorteil ist es in diesem Zusammenhang, dass aufgrund der generell erhöhten Strömungsgeschwindigkeit im Fall von Hochwasser auch keine energetische Einbuße zu befürchten ist, da in einem solchen Fall auch deutlich unterhalb der Wasseroberfläche ausreichend hohe Strömungsgeschwindigkeiten für eine effiziente Energieerzeugung zur Verfügung stehen. Es ist in diesem Sinne optimal, wenn das Aufstiegsbegrenzungsseil in Gebrauchslage von der Vorrichtung senkrecht nach unten führt und am Boden des Gewässers verankert ist und/oder durch ein Gewicht belastet ist, und dass das Aufstiegsbegrenzungsseil vorzugsweise eine Länge aufweist, die einem Normalwasserstand des Gewässers entspricht.

Strömungstechnisch hat es sich als günstig herausgestellt, wenn der Mantel einen durchgehenden viereckigen Querschnitt aufweist. In Regel ist der Mantel als Stahlblechmantel ausgebildet, es sind aber auch Lösungen aus Kunststoff denkbar. Das Durchströmgehäuse, das ist der innere Teil, hat anfänglich einen quadratischen Querschnitt, der sich im Bereich der Turbine zu einem runden, d.h. zylindrischen, Querschnitt verändert und zuletzt vorzugsweise wieder einen rechteckigen Auslauf aufweist. Auf diese Weise kann der Durchsatz optimiert werden.

Ein besonderer Vorteil der erfindungsgemäßen Lösung besteht darin, dass durch die Stabilisierung der Anlage in einer horizontalen Lage stets eine optimale Durchströmung gegeben ist. Horizontal im gegebenen Zusammenhang bezieht sich auf die Turbinenachse.

Um die erfindungsgemäße Vorrichtung auch in seitliche Richtung zu stabilisieren ist es von besonderem Vorteil, wenn zwei Ankerseile vorgesehen sind, die am Bug des Gehäuses in gleicher Höhe befestigt sind. Ein besonders einfacher Aufbau, der eine modulare Erweiterungsmöglichkeit bietet kann dadurch erreicht werden, dass das Innengehäuse einen im Wesentlichen quadratischen Zulaufquerschnitt, einen davon stromabwärts angeordneten Turbinenrohrzylinder und einen daran anschließenden sich erweiternden Auslauf mit rechteckigem Quer schnitt aufweist. Auf diese Weise wird auch eine erhöhte Stabilität im strömenden Gewässer erreicht. Durch den sich in Strömungsrichtung Auslauf tritt eine diffusorartige Wirkung ein, die den Wirkungsgrad erhöht. In diesem Zusammenhang ist es weiters von besonderem Vorteil, wenn das Außengehäuse einen durchgehenden rechteckigen Querschnitt aufweist, der sich vorzugsweise zur stromabwärtigen Seite hin erweitert. Auch diese Maßnahme dient der Stabilität und dem Wirkungsgrad.

Eine optimale Anpassung und Ausrichtung der erfindungsgemäßen Vorrichtung kann dadurch erreicht werden, dass die Hohlräume in Längsrichtung unterteilt sind und mit Wasser und/oder Druckluft befüllbar sind. Dies ermöglicht insbesondere eine vereinfachte Wartung der Vorrichtung.

Eine besonders bevorzugte Ausführungsvariante der vorliegenden Erfindung sieht am Bug des Gehäuses einen Einlaufrechen vor, der aus einem in Gebrauchslage senkrecht stehenden Schwimmkörper besteht, der sich über die gesamte Höhe des Gehäuses erstreckt, von dem aus V-förmig angeordnete Profile oder Seile ausgehen, die an den seitlichen Einlaufkanten des Gehäuses befestigt sind. Es hat sich herausgestellt, dass eine solche Bauweise eine hervorragende Stabilität der Vorrichtung, insbesondere um die Querachse ermöglicht, und gleichzeitig kleines und mittelgroßes Treibgut, das gegen die Vorrichtung geschwemmt wird, abweist ohne die Vorrichtung zu beschädigen. Ein solches Treibgut wird in der Regel zunächst auf dem senkrechten Schwimmkörper auftreffen, der entsprechend robust ausgeführt ist. Der Schwimmkörper wird das Treibgut nach rechts oder links verdrängen, das in der Folge an den V-förmig angeordneten Profilen an der Vorrichtung abgleitet. Von besonderem Vorteil ist in diesem Zusammenhang, dass das Treibgut in der Regel keine senkrechten Kräfte oder Momente auf die Vorrichtung ausübt, da diese von der Vorrichtung schwerer auszugleichen sind als waagrechte Kräfte oder Momente.

Eine erhöhte Stabilität kann durch zusätzliche Schwimmkörper an der Oberseite des Außengehäuses erreicht werden.

Um bei extremem Niedrigwasser eine Beschädigung der Vorrichtung zu vermeiden, ist es von Vorteil, wenn an der Unterseite des Außengehäuses Distanzfüße vorgesehen sind. Diese gewährleisten unter allen Umständen einen ausreichenden Abstand vom Grund des Gewässers.

In der Folge wird die folgende Erfindung anhand der in den Zeichnungen dargestellten Ausführungsvarianten näher erläutert: Es zeigen
- Fig. 1: eine Ausführungsvariante der vorliegenden Erfindung in einer seit- lichen Ansicht,
- Fig. 2: eine Ansicht von vorne,
- Fig. 3: einen Schnitt nach Linie III - III in Fig. 1; und
- Fig. 4: einen Schnitt nach Linie IV - IV in Fig. 1.

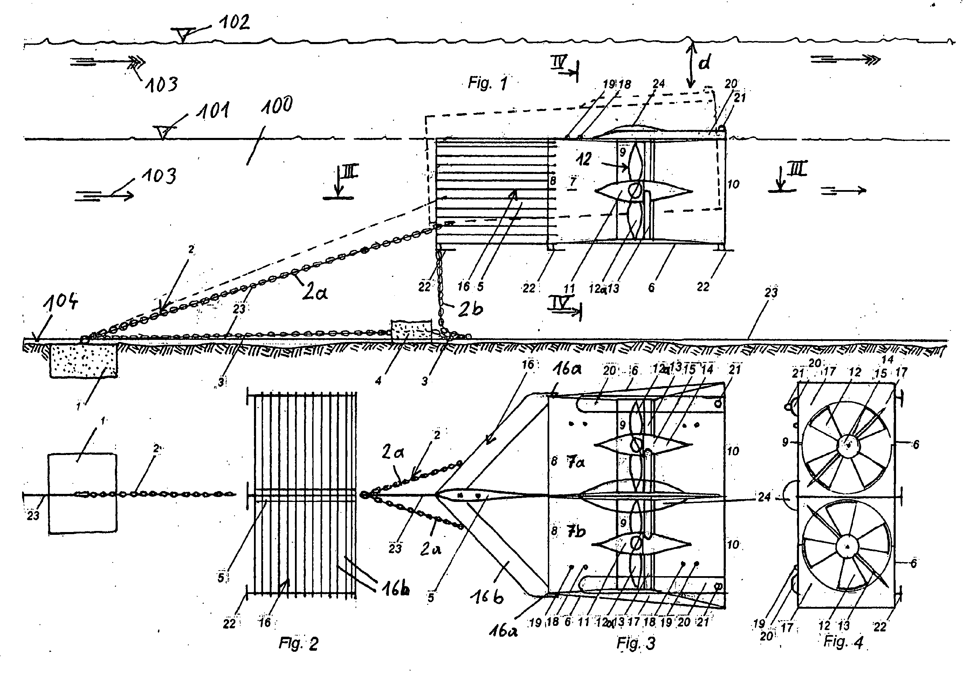

Fig. 1 zeigt einen Fluss 100, in dem die erfindungsgemäße Vorrichtung installiert ist. Der Wasserspiegel bei normalem Wasserstand ist mit 101 gekennzeichnet, während der Wasserspiegel bei Hochwasser mit 102 bezeichnet ist. Die Strömungsrichtung ist durch Pfeile 103 angezeigt.

Am Flussgrund 104 des Flusses 100 ist ein schwerer Anker 1 eingesetzt, an dem das allgemein mit 2 bezeichnete Zugmittel befestigt ist, das die Vorrichtung an dem dafür vorgesehenen Platz hält. Im Detail besteht das Zugmittel 2 aus zwei Ankerseilen 2a und aus einem Aufstiegsbegrenzungsseil 2b. Das Aufstiegsbegrenzungsseil 2b ist durch ein Gewicht 4 am Flussgrund 104 gehalten und dient dazu, die Aufstiegshöhe der Vorrichtung zu begrenzen. Um die Verankerung zu vereinfachen ist das Aufstiegsbegrenzungsseil 2b vom Gewicht 4 weiter zum Anker 1 geführt und dort ebenfalls verankert.

Bei der in Fig. 1 durchgezogen dargestellten Stellung der Vorrichtung wird die Höhe der Vorrichtung im Wesentlichen durch den Auftrieb bestimmt, so dass diese unmittelbar unter der Wasseroberfläche 101 angeordnet ist. Das Aufstiegsbegrenzungsseil 2b besitzt einen losen Abschnitt 3.

Steigt der Wasserspiegel 101 auf einen Hochwasserpegel 102 an, dann erreicht die Vorrichtung die in Fig. 1 mit unterbrochenen Linien dargestellte Lage. In dieser Lage ist das Aufstiegsbegrenzungsseil 2b senkrecht gespannt und begrenzt einen weiteren Aufstieg der Vorrichtung. Wie aus der Darstellung ersichtlich, kann diese dabei eine leichte Schräglage einnehmen, da das Aufstiegsbegrenzungsseil 2b im stromaufwärtigen Abschnitt angebracht ist. Jedenfalls wird durch diese Maßnahme ein vorbestimmter Abstand d von der Wasseroberfläche 102 erreicht, der sich mit zunehmendem Pegelstand noch vergrößert. An der Wasseroberfläche 102 mitgerissenes Schwemmgut wird daher die Vorrichtung nicht beschädigen, sofern es keine weit unter die Wasseroberfläche ragende Abschnitte besitzt.

Die Vorrichtung selbst besteht aus einem Außengehäuse 6 und einem Innengehäuse 7, wobei das Außengehäuse 6 einen im Wesentlichen rechteckigen Querschnitt aufweist, der sich in stromabwärtiger Richtung seitlich erweitert. Das Innengehäuse 7 ist in zwei Fluten 7a, 7b unterteilt, in denen jeweils an einer Aufhängung 13 eine Turbine 12 vorgesehen ist, die über ein Getriebe 15 einen Generator 14 antreibt. Die Zulauföffnung 8 des Innengehäuses 7 besitzt einen Querschnitt 9, der sich aus zwei nebeneinander angeordneten Quadraten zusammensetzt. Im Bereich der Turbine 12 ist das Innengehäuse 7 rund ausgeführt, um einen optimalen Wirkungsgrad zu erreichen. An der Austrittsöffnung 10 wird wiederum ein rechteckiger Querschnitt erreicht.

Die Turbine 12 wird in axialer Richtung beaufschlagt und besitzt je nach Ausführung verstellbare oder starre Schaufeln 12a. Ein Einlaufrechen 16 erstreckt sich von einem in Gebrauchslage senkrecht stehenden Schwimmkörper 5 an der stromaufwärtigen Seite der Vorrichtung zu den seitlichen Einlaufkanten 16a des Gehäuses 6, 7. Der Rechen ist aus V-förmig angeordneten Profilen 16b zusammengesetzt, die sich in Gebrauchslage in waagrechter Richtung übereinander vom Schwimmkörper 5 zu den Einlaufkanten 16a hin erstrecken. Diese Konstruktion hat sich als besonders robust und widerstandsfähig herausgestellt und stellt gleichzeitig sicher, dass die Einströmung so wenig wie möglich behindert wird. Zwischen dem Außengehäuse 6 und dem Innengehäuse 7 sind Hohlräume 17 vorgesehen, die mit Wasser oder Pressluft geflutet werden können, um den Auftrieb der Vorrichtung einzustellen. Dazu sind Pressluftventile 18 und Wassereinfüllstutzen 19 angebracht. An der sich im Normalfall oberhalb der Wasseroberfläche 101 befindlichen Teile 20 der Vorrichtung können Signalanlagen 21 vorgesehen sein, um ein Überfahren durch Schiffe zu verhindern. An der Unterseite der Vorrichtung sind Füße 22 angebracht, die auch im Fall von extremem Niedrigwasser einen ausreichenden Abstand zum Flussgrund sicherstellen. Stromkabel 23 dienen dazu die erzeugte elektrische Energie an Land entsprechend abzuleiten. Eine Regelungseinrichtung für diese Vorrichtung ist mit 24 bezeichnet.

Die erfindungsgemäße Vorrichtung ermöglicht es, in frei fließenden, ungestauten Gewässern auch dann eine kraftwerksmäßige Nutzung zu realisieren, wenn aus wirtschaftlichen oder ökologischen Gründen die Errichtung herkömmlicher Kraftwerke nicht möglich ist. Die wirtschaftliche Nutzung der Vorrichtung setzt lediglich eine angemessene Strömungsgeschwindigkeit voraus und ist völlig umweltfreundlich und frei von schädlichen Einwirkungen auf die Umwelt. Die erfindungsgemäße Vorrichtung ist robust gegenüber Hochwasser, Niedrigwasser, Treibgut, Vereisung, Eisstoß, Verklausung, Schottergeschiebe, Groß- und Sportschifffahrt, sowie Vandalismus.

## Patentansprüche

1. Vorrichtung zur Erzeugung elektrischer Energie in frei fließenden Gewässern, mit einem Gehäuse, das aus einem Außengehäuse (6) und einem Innengehäuse (7) besteht, das einen als Saugrohr ausgebildeten Auslauf (10) aufweist, wobei zwischen dem Außengehäuse (6) und dem Innengehäuse (7) Hohlräume (17) vorgesehen sind, um die Vorrichtung knapp unter der Wasseroberfläche zu stabilisieren, mit mindestens einer im Innengehäuse (7) angeordneten Turbine (12), die in Axialrichtung durchströmt wird und die mit einem Generator (14) verbunden ist, und mit einem Zugmittel (2) zur Verankerung der Vorrichtung, **dadurch gekennzeichnet, dass** die Vorrichtung einen Mantel (6) mit einem durchgehenden viereckigen Querschnitt und ein Durchströmgehäuse (7) aufweist, das einen etwa quadratischen Zulauf, einen daran anschließenden Turbinenrohrzylinder und einen vorzugsweise rechteckigen Auslauf aufweist, dass die Hohlräume zwischen dem äußeren Mantel und dem Durchströmgehäuse (7) in der Länge unterteilt sind und mit Wasser oder Druckluft befüllbar sind und dass das Zugmittel (2) aus mindestens einem längeren Ankerseil (2a), das Ankerseil (2a) in Gebrauchslage schräg vor der Vorrichtung am Boden des Gewässers verankert ist, und aus mindestens einem kürzeren Aufstiegsbegrenzungsseil (2b) besteht, sowie dass die Freistromturbinenanlage in einer horizontalen Lage knapp unter der Wasseroberfläche stabilisierbar ist.

2. Vorrichtung nach Anspruch 1, **dadurch gekennzeichnet, dass** das Aufstiegsbegrenzungsseil (2b) in Gebrauchslage von der Vorrichtung senkrecht nach unten führt und am Boden des Gewässers verankert ist und/oder durch ein Gewicht belastet ist, und dass das Aufstiegsbegrenzungsseil (2b) vorzugsweise eine Länge aufweist, die einem Normalwasserstand des Gewässers entspricht.

3. Vorrichtung nach einem der Ansprüche 1 oder 2, **dadurch gekennzeichnet, dass** zwei Ankerseile (2a) vorgesehen sind, die am Bug des Gehäuses in gleicher Höhe befestigt sind.

4. Vorrichtung nach einem der Ansprüche 1 bis 3, **dadurch gekennzeichnet, dass** die Turbine als langsamlaufende Turbine ausgebildet ist.

5. Vorrichtung nach einem der Ansprüche 1 bis 4, **dadurch gekennzeichnet, dass** das Innengehäuse (7) einen im Wesentlichen quadratischen Zulaufquerschnitt, einen davon stromabwärts angeordneten Turbinenrohrzylinder und einen daran anschließenden sich erweiternden Auslauf mit rechteckigem Querschnitt aufweist.

6. Vorrichtung nach einem der Ansprüche 1 bis 5, **dadurch gekennzeichnet, dass** das Außengehäuse (6) einen durchgehenden rechteckigen Querschnitt aufweist, der sich vorzugsweise zur stromabwärtigen Seite hin erweitert.

7. Vorrichtung nach einem der Ansprüche 1 bis 6, **dadurch gekennzeichnet, dass** die Hohlräume (17) in Längsrichtung unterteilt sind und mit Wasser und/oder Druckluft befüllbar sind.

8. Vorrichtung nach einem der Ansprüche 1 bis 7, **dadurch gekennzeichnet, dass** am Bug des Gehäuses ein Einlaufrechen (16) vorgesehen ist, der aus einem in Gebrauchslage senkrecht stehenden Schwimmkörper (5) besteht, der sich über die gesamte Höhe des Gehäuses (6, 7) erstreckt, von dem aus V-förmig angeordnete Profile (16b) oder Seile ausgehen, die an seitlichen Einlaufkanten (16a) des Gehäuses (6, 7) befestigt sind.

9. Vorrichtung nach einem der Ansprüche 1 bis 8, **dadurch gekennzeichnet, dass** an der Oberseite des Außengehäuses (6) zusätzliche Schwimmkörper (20) vorgesehen sind.

10. Vorrichtung nach einem der Ansprüche 1 bis 9, **dadurch gekennzeichnet, dass** an der Unterseite des Außengehäuses (6) Distanzfüße (21) vorgesehen sind.

## Claims

1. An apparatus for generating electric power in freely flowing bodies of water, comprising a housing which consists of an external housing (6) and an inside housing (7) comprising an outlet (10) arranged as a suction pipe, with cavities (17) being provided between the external housing (6) and the inside housing (7) in order to stabilize the apparatus slightly beneath the water surface, at least one turbine (12) which is arranged in the inside housing (7), is flowed through in the axial direction and is connected with a generator (14), and a traction means (2) for anchoring the apparatus, **characterized in that** the apparatus comprises a jacket (6) of a continuous square cross section and a flow housing (7) which comprises an approximately square inlet, an adjacent turbine pipe cylinder and a preferably rectangular outlet, the cavities between the outer jacket and the flow housing (7) are subdivided in their length and can be filled with water or compressed air, and the traction means (2) consists of at least one longer anchoring cable (2a), with the anchoring cable (2a) being anchored in the used position in an inclined way in front of the apparatus on the floor of the body of water, and of at least one shorter ascension limiting cable (2b), and the free-flow turbine installation can be stabilized in a horizontal position slightly beneath the water surface.

2. An apparatus according to claim 1, **characterised in that** the ascension limiting cable (2b) leads downwardly perpendicular away from the apparatus in the used position and is anchored to the floor of the body of water and/or is loaded by a weight, and the ascension limiting cable (2b) preferably has a length which corresponds to the normal water level of the body of water.

3. An apparatus according to one of the claims 1 or 2, **characterised in that** two anchoring cables (2a) are provided which are fastened to the bow of the housing at the same height.

4. An apparatus according to one of the claims 1 to 3, **characterised in that** the turbine is arranged as a slow-speed turbine.

5. An apparatus according to one of the claims 1 to 4, **characterised in that** the inside housing (7) comprises a substantially square inlet cross section, a downstream turbine pipe cylinder and an adjacent expanding outlet of rectangular cross section.

6. An apparatus according to one of the claims 1 to 5, **characterised in that** the external housing (6) has a continuous rectangular cross section which preferably expands towards the downstream side.

7. An apparatus according to one of the claims 1 to 6, **characterised in that** the cavities (17) are subdivided in the longitudinal direction and can be filled with water and/or compressed air.

8. An apparatus according to one of the claims 1 to 7, **characterised in that** a trashrack (16) is provided at the bow of the housing which consists of a floating body (5) which stands perpendicularly in the used position, extends over the entire height of the housing (6, 7) and from which profiles (16b) or cables originate which are arranged in a V-shaped manner and are fastened to lateral inlet edges (16a) of the housing (6, 7).

9. An apparatus according to one of the claims 1 to 8, **characterised in that** additional floating bodies (20) are provided on the upper side of the external housing (6).

10. An apparatus according to one of the claims 1 to 9, **characterised in that** spacer feet (21) are provided on the bottom side of the external housing (6).

## Revendications

1. Dispositif pour générer de l'énergie électrique dans des eaux courantes, comprenant un boîtier formé d'un boîtier extérieur (6) et d'un boîtier intérieur (7) ayant une sortie (10) réalisée sous la forme de tubes d'aspiration,
des cavités (17) étant prévues entre le boîtier extérieur (6) et le boîtier intérieur (7) pour stabiliser le dispositif juste sous la surface de l'eau avec une turbine (12) dans le boîtier intérieur (7), à passage axial, cette turbine étant reliée à un générateur (14) et des moyens de traction (2) pour ancrer le dispositif,
**caractérisé en ce que**
le dispositif comporte une enveloppe (6) ayant une section quadrangulaire continue et un boîtier de passage (7) ayant une entrée sensiblement quadrangulaire, suivie d'un cylindre tubulaire de turbine et, de préférence, une sortie rectangulaire,
les cavités entre l'enveloppe extérieure et le boîtier de passage (7) étant subdivisées dans le sens longitudinal et pouvant être remplies d'eau ou d'air comprimé, et
le moyen de traction (2) se compose d'au moins un câble d'ancrage, long (2a), ce dernier étant accroché en position d'utilisation, en biais en amont du dispositif, dans le lit du courant d'eau et d'au moins une partie de câble de limitation de remontée (2b) limitant la remontée, et stabilisant l'installation à turbine à flux libre dans une position horizontale juste sous la surface de l'eau.

2. Dispositif selon la revendication 1,
**caractérisé en ce que**
le câble de limitation de remontée (2b) est conduit verticalement vers le bas à partir du dispositif en position d'utilisation pour être ancré au fond du lit du courant d'eau et/ ou est chargé par un poids, et le câble de limitation de remontée (2b) a, de préférence, une longueur qui correspond au niveau d'eau normal du courant d'eau.

3. Dispositif selon l'une des revendications 1 ou 2,
**caractérisé par**
deux câbles d'ancrage (2a) fixés à l'avant du boîtier et à même hauteur.

4. Dispositif selon l'une des revendications 1 à 3,
**caractérisé en ce que**
la turbine est une turbine à rotation lente.

5. Dispositif selon l'une des revendications 1 à 4,
**caractérisé en ce que**
le boîtier intérieur (7) comporte une section d'entrée pratiquement quadratique, un cylindre tubulaire de turbine en aval de l'entré suivi d'une sortie s'élargissant avec une section rectangulaire.

6. Dispositif selon l'une des revendications 1 à 5,
**caractérisé en ce que**
le boîtier extérieur (6) a une section rectangulaire continue qui s'élargit de préférence du côté aval.

7. Dispositif selon l'une des revendications 1 à 6,
**caractérisé en ce que**
les cavités (17) sont subdivisées dans la direction longitudinale et peuvent être remplies avec de l'eau et/ ou de l'air comprimé.

8. Dispositif selon l'une des revendications 1 à 7,
**caractérisé en ce que**
l'avant du boîtier comporte une grille d'entrée (16) se composant d'un corps de flotteur (5) disposé verticalement en position d'utilisation, et qui occupe toute la hauteur du boîtier (6, 7) et des profilés (16b) ou des câbles installés en forme de V partent de celui-ci pour être fixés aux arêtes d'entrée (16a), latérales du boîtier (6, 7).

9. Dispositif selon l'une des revendications 1 à 8,
**caractérisé en ce que**
le côté supérieur du boîtier extérieur (6) comporte des flotteurs supplémentaires (20).

10. Dispositif selon l'une des revendications 1 à 9,
**caractérisé en ce que**
le côté inférieur du boîtier extérieur (6) comporte des pieds d'écartement (21).
